# EUROPEAN PATENT APPLICATION

(11) **EP 4 105 853 A1**
(43) Date of publication of application: **21.12.2022**
(21) Application number: 21179262.7
(22) Date of filing: 14.06.2021
(51) Int. Cl.: G06Q 10/00

(54) **A SYSTEM AND A METHOD FOR VALIDATION THE USE OF AN ACTIVITY AREA**

(71) Applicant: Count4Care ApS, 2680 Solrød Strand (DK)
(72) Inventor: JØRGENSEN, Carsten, 4600 Køge (DK); PEHRSON, Lars, 2660 Brøndby Strand (DK)
(74) Representative: AWA Denmark A/S

(57) **Abstract**

The system for validating the use of an activity area (1) comprises an activity area (1) having at least one activity detector (3) adapted for collecting activity data. A computer (4) is configured for determining, based on the activity data, an activity level in one or more zones in said activity area (1), comparing the activity level in said one or more zones onto a known mapping of said activity area (1), and determining whether the activity level in said one of more zones is above a predetermined activity value based on said known mapping.

## Description

The present invention relates to a method and a system for validating the use of an activity area, such as but not limited to children's playgrounds.

Activity areas such as children's playgrounds comprise expensive furniture, such as swings, roundabouts, slides, climbing frames, sandboxes, see-saws etc. The furniture is arranged with proper spacing between them to ensure safety. Often there will also be benches for the accompanying parents looking after their children.

The choice of furniture and the overall layout of the playground is typically done by an experienced professional with knowledge of the targeted age group, within the constraints of physical area and economical budget available. Being based on experience, the layout may therefore be strongly subject to the feelings, and personal ideas of the person or group, designing the playground. Lack of experience, subjective ideas or anecdotal evidence of how to design a playground may accordingly lead to a sub-optimal layout, where certain pieces of furniture are underutilized. Underutilization could also happen if the playground is a public playground, and there is a lack of demographic basis, i.e. children in the targeted age group.

Furthermore, it is well known that there is a link between children's physical activity and their learning abilities. Thus, if a school's playground is extensively used it is an indicator that during classes the learning abilities of the school children are also high. If the playground or parts thereof is underutilized, it may therefore be relevant to reconsider the layout of the playground in order to improve learning abilities.

Based on this, it is the object of the present invention to provide a method and a system for verifying the use of an activity area, such as a children's playground.

According to a first aspect of the invention, this object is achieved by a method of validating the use of an activity area, comprising the steps of: providing at said activity area at least one activity detector, collecting activity data using said at least one detector, determining, based on the activity data, an activity level in one or more zones in said activity area, comparing the activity level in said one or more zones onto a known mapping of said activity area, determining whether the activity level in said one of more zones is above a predetermined activity value based on said known mapping.

With this method, objective data reflecting the actual use of the activity area can be gained. This, in turn, provides verified knowledge on whether parts of the activity area are underutilized or possibly not used at all. Such knowledge can then be used to redesign the activity area for better utilization, or in the long term, when sufficient knowledge has been gained from multiple activity areas, lead to better design of activity areas.

According to a second aspect of the invention the objective is achieved by a system for validating the use of an activity area, comprising an activity area having at least one activity detector adapted for collecting activity data, a computer configured for determining, based on the activity data, an activity level in one or more zones in said activity area, comparing the activity level in said one or more zones onto a known mapping of said activity area, determining whether the activity level in said one of more zones is above a predetermined activity value based on said known mapping.

According to a preferred embodiment of the invention, the step of determining whether the activity level in said one of more zones is above a predetermined value is performed in at least one predetermined time window. Hereby, it becomes possible to link the activity to certain time periods. For instance, link the activity of school children during recess to subsequent time classes. It may also be possible to monitor the use of an activity area throughout the day, to verify when which parts of an activity is used and whether some are underutilized. It may also be possible to detect undesired utilization, e.g. at night time.

According to another preferred embodiment, a warning is given if in one or more of said zones of activity the activity is not above the predetermined value, in particular the warning could be an underutilization alert. This warning could then prompt systematic consideration of the design based on all data collected in order to improve the activity area.

According to a further preferred embodiment, the underutilization alert is sent to a maintenance responsible authority. This may prompt a groundskeeper or janitor to check whether something is wrong with the furniture, e.g. a see-saw or a swing not being used due to a defect that need to be repaired. This could trigger prompt repair and increase the utilization of the activity area.

According to a further embodiment of the invention, a remote server is provided and the steps of determining, based on the activity data, an activity level in one or more zones in said activity area, comparing the activity level in said one or more zones onto a known mapping of said activity area, determining whether the activity level in said one of more zones is above a predetermined value based on said known mapping, are performed on said remote server. Keeping the data processing on a remote server reduces the requirements of the hardware needed *in-situ* at the activity area. The computer used as the server may then also be available for the analysis of the data, the display of results, the issuance of warnings, etc.

According to yet another preferred embodiment, the activity data is anonymized in at least one activity detector. By anonymizing the activity data at the source a high degree of data security in terms of protection of personal information of those present in the activity area, and hence the acceptance among the users of the activity area.

According to a further embodiment, the one or more zones have different predetermined activity values. This takes into account the fact that not all activity areas may be capable of the same activity level, some areas will inherently be very low, or may play a lesser role for the overall activity to be verified, e.g. benches for parents at a children's playground or the necessary areas between furniture, where the activity would be lower than at the furniture.

According to a most preferred embodiment, activity area is a children's playground. Children's playgrounds are considered the areas where the invention will yield most relevant information, as there are many of them, they are prone to hard use, and they are relevant for the wellbeing and learning abilities of children.

The invention will now be described in greater detail, based on nonlimiting exemplary embodiments and with reference to the drawing, on which:
Fig. 1 schematically shows system for verifying activity an activity area according to the invention,
Fig. 2 shows an activity detector and a computer forming part of the system according to the invention,
Fig. 3 shows steps of object detection and tracking, and
Fig. 4 shows steps of statistical analysis of utilization.

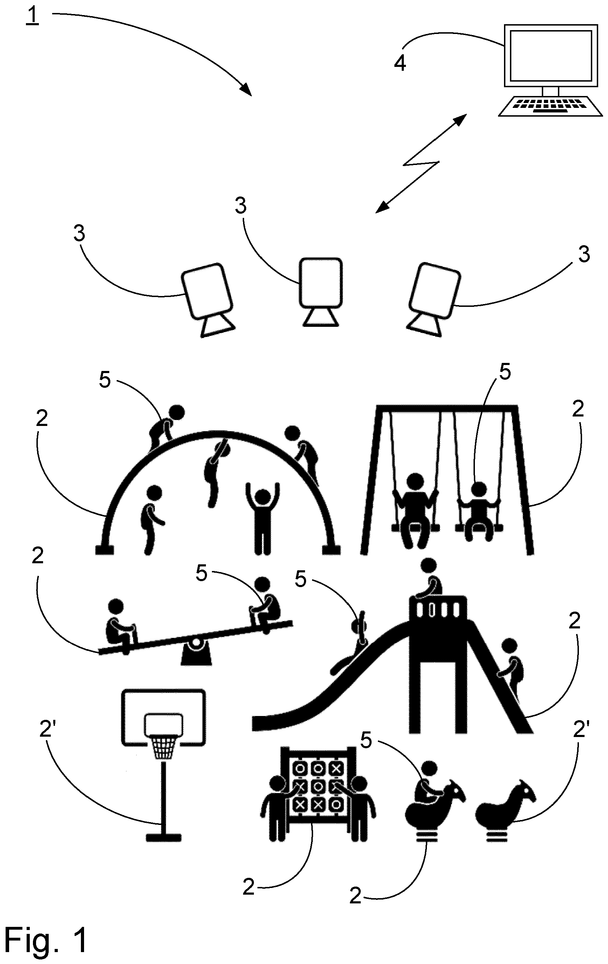

Turning first to fig. 1 an activity area according to the invention is shown. The outset for the present invention is as illustrated a children's playground, and for the convenience of explanation the following description will be given for a children's playground 1. However, the activity area can in principle be any kind of activity area, such as an area with outdoors exercise equipment, a swimming or bathing facility, a children's playground 1 or even combinations thereof. The activity area may also be indoors.

The playground 1 comprises a number of pieces of equipment or furniture generally denoted with the reference numeral 2, but with the addition of a prime to distinguish unused furniture 2'. Playground furniture 2 comes in many variations, *inter alia* depending on the targeted age group, and may, as illustrated, include swings, slides, climbing frames, see-saws, basketball hoops, rocking horses, and game frames, as well as roundabouts, sandboxes etc. It may also include benches for accompanying adults as well as voids deliberately left open, as opposed to the spacing necessary to ensure safe distancing between the various pieces of furniture 2. Such voids may include areas with purpose selected surfaces or areas with markings painted on the ground, e.g. hopscotch grids. In principle the invention is applicable to just a single piece of furniture 2, but typically a playground would comprise several different pieces of furniture 2.

The playground 1 also comprises a number of suitably distributed and oriented activity detectors 3 to monitor the furniture 2 and, preferably, also the voids between them. Depending on e.g. the type of activity detector 3 and the layout of the playground 1 a single activity detector 3 may suffice. The activity detectors 3 could include digital cameras for visible and/or infrared light, laser scanners, LiDAR scanners, range sensors, stereo cameras, structured light sensors, etc. as well as combinations thereof. Currently, stereo cameras are preferred. Stereo cameras allow detection of persons 5 in the field of view as well as their number based on image recognition and the assessment of current position, velocity, and direction of motion in all three dimensions of each of the persons 5. This may be done using software adapted to recognize persons 5 and constructing simplified models, such as outlines or skeletons, i.e. stick persons. Preferably, the image recognition is adapted to continuously track the individual persons 5, not only during current presence in the field of view, but also to regain track even if a tracked person 5 moves out of the field of view and back in again,

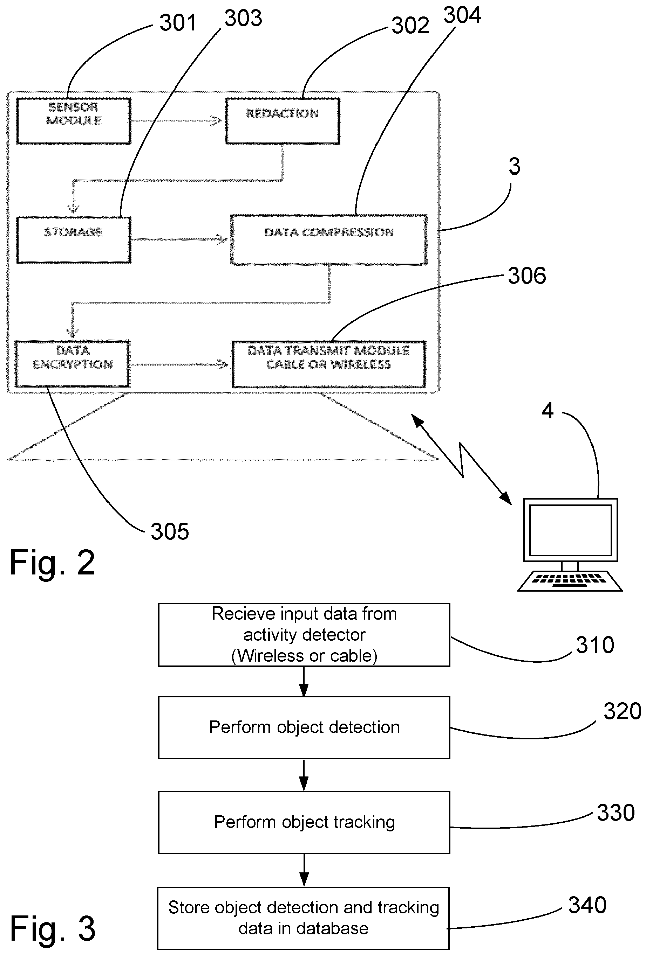

As an example, the activity detector 3 illustrated in Fig. 3 comprises a sensor module 301. The sensor module 301 could be an imaging chip adapted to capture physical input such as visible or infrared light and convert it into digital data that may be processed by a digital data processor. If the digital data processing of activity data includes image recognition as part of the activity detection algorithms or in other ways allow individual persons 5 to be recognized, the resulting data may be anonymized in a redaction module 302, in order to keep the individuals recognized as persons 5 performing activity anonymous. If outlines or skeletons are constructed in the motion detection, these may substitute the actual images, and thus provide the desired anonymity.

The anonymized data may be stored internally in a storage module 303 in the activity detector 3. The data may also be compressed in a data compression module 304 as well as encrypted in a data encryption module 305. Some of these steps and modules 302 - 305 may, depending on the nature of the sensor module 301 and on the output data from the sensor module 201, be unnecessary or optional, e.g. if persons or individual cannot possibly be recognised anyway. Some of these modules 302, 304 and 305 may be implemented as software. Also, the sequence need not be as described, e.g. data compression could be made before the storage. The processed and preferably anonymized and encrypted data may then be transmitted to a remote computer 4 or server where it is stored, e.g. in a database, and may be used for further processing and analysis, such as statistical analysis of the detected activity, e.g. determination of activity levels in various zones, comparison of the zones of activity with a known map of the playground 1, i.e. the location of furniture 2 and voids between them, correlation of activity with predetermined time windows, etc. Activity levels could be considered in different ways, e.g. in terms of number of persons 5 in the zone, the individual movement of the persons 5 in the zone, the movement of movable furniture 2, such as see-saws, swings, rocking horses and roundabouts, as well as the sums and weighted averages of these movements.

In particular such analysis may be used to identify if there are zones of low activity, be it temporarily or permanently, e.g. by comparison to a predetermined threshold. A warning of low activity in certain zones could then be given in order to instigate further investigation of the cause. If the zone containing the rocking horse 2' in Fig. 1 is suddenly permanently below a threshold, an alert could be given by the computer 4 to a groundskeeper or a janitor to check whether the rocking horse 2' is out of order and, if so, take steps to have it repaired. The warning could also be an alert to further investigate the reasons and possibly reconsider the layout of the playground 1. In the illustrated example, it could be that the baseball hoop 2' is not used because the age group for which the remainder of the furniture 2 is suited, or the children allowed access to the playground 1 are below the age of those interested in or physically capable of playing basketball. This means that the playground is at least partially underutilized.

An underutilized playground 1 at a school could potentially influence the learning abilities. It is well established that there is a link between children's physical activity and their learning ability. Getting a warning about this and reconsideration of the layout of the playground 1 may therefore lead to a better playground 1 appealing to more activity, in turn, leading to better learning. This would then allow a school to document having awareness of and focus on learning environment.

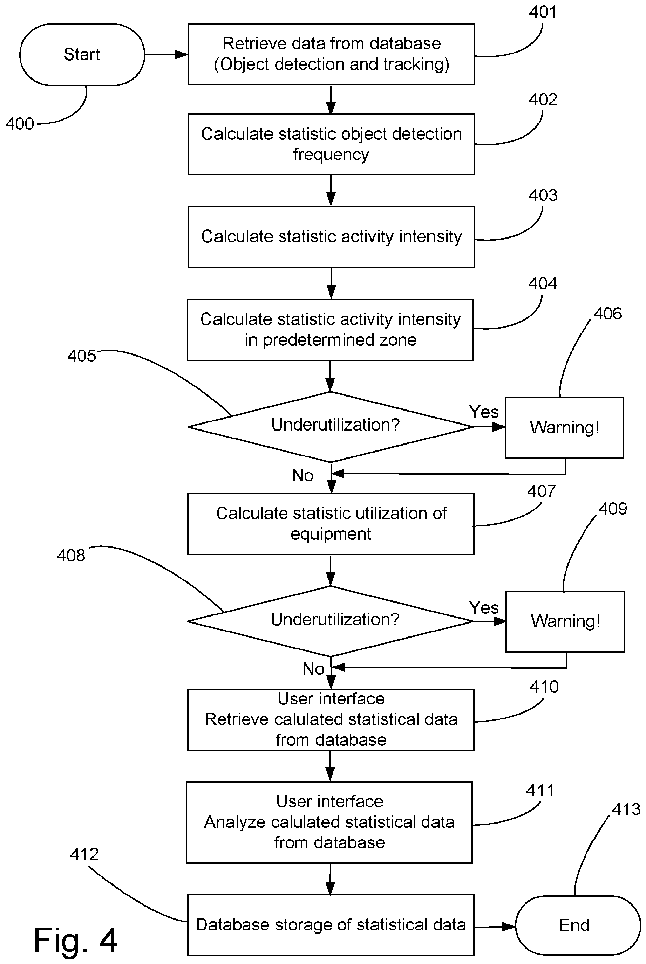

Turning now to Fig. 3 and 4 examples of the data processing in the computer 4 that could be performed.

In Fig. 3 the computer 4 receives, in box 310, input data from the one or more activity detectors 3. In box 320 the computer performs object detection. How this object detection is performed depends on the input from the activity detectors 3. If for instance the sensor module 301 is an imaging chip, pattern recognition algorithms adapted to recognize objects, such as persons 5, may be applied. The persons 5 or other objects identified, may then, in box 330, be tracked for motion including amount and speed, etc. The results can then, in box 340, be stored in a database.

After starting the processing algorithms in box 400, data is, in box 401, retrieved from a database, e.g. that of box 340, or other storage of the data derived from the activity detectors 3. In box 402 a statistical object detection frequency may then be calculated, this could include number of persons 5 and/or other moving objects, such as moving furniture 2. The statistic object frequency calculation may include rate of motion based on motion detection so as to distinguish high intensity from low intensity not only based on number and density of persons 5, but also on the rate of movement, so as to calculate, in box 403, a statistic activity intensity. Statistic activity intensity may be defined and calculated in numerous ways based on various input parameters. Evidently, as indicated above, the number of identified persons 5 and their actual and relative locations are relevant parameters. Also, velocity of motion and direction of motion are relevant intensity parameters. The statistic activity intensity may also include weighed averages over time. Furthermore, entirely different activity intensity indicators may be included, such as e.g. body temperature if infrared sensing or imaging is used. The statistic activity intensity may be used to calculate and identify, in box 404, the different statistic intensities in different zones, e.g. corresponding to a known map of the playground 1, such as where the different pieces of furniture 2, 2' are located. If mapping of activity zones onto known information about the layout of the playground 1 yields, in box 405, that at least during a predetermined period, such as recess, is below a given threshold the zone, and hence the furniture 2' is underutilized, a warning may be given in box 406. This warning could be an alert to a maintenance responsible authority, such as a groundskeeper or janitor to check whether the furniture 2' is defective and needs repair. This allows efficient maintenance of the playground 1, without spending man-hours on active and mostly unnecessary routine checks. Evidently, other factors may be used in determining underutilization, such knowledge of the weather, and daylight hours, so as not to trigger any false warnings, just because the weather happens to be cold and rainy. Also, in box 407, it may be calculated whether parts of the playground 1 are not used as statistically expected, i.e. it may be checked whether certain areas of the playground 1 are not used as much as others, and underutilization may be established. If this is not caused by the furniture 2 being defective as would have been established in boxes 404-406, another kind of warning may be given off. Such another kind of warning could be to investigate more thoroughly the playing patterns of the children in the playground 1, be it by in-situ observation or review of stored data. The latter could be done using a suitable interface on the computer, allowing a user to retrieve calculated statistical data from the database, in box 410, for analysis in box 411, and final storage in box 412 if relevant. This subsequent analysis could then reveal whether parts of the playground 1 are not used for other reasons, such as being unsuitable for the age group allowed onto the playground 1 or that parts of the playground 1 feel less safe or secure. If so, steps may be taken to redesign at least these parts of the playground, to increase playing intensity in these areas, in turn, better utilizing the area, and allowing more room for play by lowering the high intensity in other places.

With a system as described it becomes possible to monitor a playground for efficient play in terms of high intensity, gain knowledge of the actual playing taking place and use such knowledge to redesign an inefficient playground and design better future playgrounds 1. The skilled person will understand that without departing from the scope of the invention, the activity detectors 3 may be devised in numerous different ways depending on the detection technology used. Likewise, statistical analysis may be performed in numerous ways, depending on the knowledge sought to be derived in order to improve the playground 1 and the playing habits of the children.

## Claims

1. A method of validating the use of an activity area, comprising the steps of:
a) providing at said activity area at least one activity detector,
b) collecting activity data using said at least one detector,
c) determining, based on the activity data, an activity level in one or more zones in said activity area,
d) comparing the activity level in said one or more zones onto a known mapping of said activity area,
e) determining whether the activity level in said one of more zones is above a predetermined activity value based on said known mapping.

2. A method according to claim 1, wherein the step e) of determining whether the activity level in said one of more zones is above a predetermined value is performed in at least one predetermined time window.

3. A method according to claim 2, wherein a warning is given if in one or more of said zones of activity the activity is not above the predetermined value.

4. A method according to claim 3, wherein the warning is an underutilization alert.

5. A method according to claim 4, wherein the underutilization alert is sent to a maintenance responsible authority.

6. A method according to any one of the preceding claims wherein a remote server is provided and wherein the steps of
c) determining, based on the activity data, an activity level in one or more zones in said activity area,
d) comparing the activity level in said one or more zones onto a known mapping of said activity area,
e) determining whether the activity level in said one of more zones is above a predetermined value based on said known mapping,
are performed on said remote server.

7. A method according to any one of the preceding claims, wherein, in the at least one activity detector, the activity data is anonymized.

8. A method according to any one of the preceding claims, wherein said one or more zones have different predetermined activity values.

9. A method according to any one of the preceding claims, wherein the activity area is a children's playground.

10. A system for validating the use of an activity area, comprising
an activity area having at least one activity detector adapted for collecting activity data,
a computer configured for
c) determining, based on the activity data, an activity level in one or more zones in said activity area,
d) comparing the activity level in said one or more zones onto a known mapping of said activity area,
e) determining whether the activity level in said one of more zones is above a predetermined activity value based on said known mapping.

11. A system according to claim 10, wherein the computer is configured to determine whether the activity level in said one of more zones is above a predetermined value is performed in at least one predetermined time window.

12. A system according to claim 10, wherein the computer is configured to give a warning if in one or more of said zones of activity the activity is not above the predetermined value.

13. A system according to claim 12, wherein the warning is underutilization alert.

14. A system according to claim 13, wherein the computer is configured to send the underutilization alert to a maintenance responsible authority.

15. A system according to any one claims 10 to 14, wherein the computer is a remote server.

16. A system according to any one claims 10 to 15, wherein, the at least one activity detector is configured for anonymizing the activity data.

17. A system according to any one of claims 10 to 16, comprising digital storage for one or more pieces of information selected from the group comprising: the known mapping of said activity area, the predetermined activity values for said one or more zones, the at least one predetermined time window.

18. A system according to any one of claims 10-17, wherein the activity area is a children's playground.
